# EUROPÄISCHE PATENTSCHRIFT

(11) **EP 2 737 150 B1**
(45) Veröffentlichungstag und Bekanntmachung des Hinweises auf die Patenterteilung: **24.02.2016**
(21) Anmeldenummer: 12758761.6
(22) Anmeldetag: 22.08.2012
(51) Int. Cl.: E05F 15/608, F16H 7/02, F16H 7/12

(54) **ANTRIEBSVORRICHTUNG FÜR EINEN KARUSSELLTÜRROTOR**
DRIVE DEVICE FOR A REVOLVING DOOR ROTOR
DISPOSITIF D'ENTRAÎNEMENT POUR ROTOR DE PORTE À TAMBOUR

(30) Priorität: 24.11.2011 DE 102011119416
(43) Veröffentlichungstag der Anmeldung: 04.06.2014
(73) Patentinhaber: Agtatec AG, 8320 Fehraltorf (CH)
(72) Erfinder: AEPPLI, Heinz-Peter, CH-8489 Wildberg (CH); OILA, Kari, CH-8038 Zürich (CH)
(74) Vertreter: Flach, Dieter Rolf Paul
(86) Internationale Anmeldenummer: PCT/EP2012/003555
(87) Internationale Veröffentlichungsnummer: WO 2013/075761

(56) Entgegenhaltungen:
- EP-A1- 0 165 443
- DE-U1-202005 000 163
- US-A1- 2003 089 042

## Beschreibung

Die vorliegende Erfindung betrifft eine Antriebsvorrichtung für einen Rotor einer Karusselltür nach dem Oberbegriff des Anspruchs 1 und eine mit dieser Antriebsvorrichtung ausgestattete Karusselltür.

Karusselltüren werden insbesondere als repräsentative, einen Blickfang darstellende Lösung für eine Eingangspassage an einem Gebäude benutzt. Derartige Karussell- oder Drehtüren können außerhalb oder innerhalb einer Fassadenwand oder wandmittig installiert werden.

Eine Karusselltür weist üblicherweise kreisbogenförmig gekrümmte Seitenwände auf, zwischen denen sich mittig ein Rotor dreht. Von einer mittigen Rotorachse ausgehend, die auch als Zentralachse des Rotors bezeichnet wird, sind in Radialrichtung verlaufend beispielsweise zwei, drei oder mehrere in Umfangsrichtung in gleichen Winkelabständen versetzt zueinander liegende Rotorflügel angeordnet. Karusselltüren können durch einen insbesondere als Elektromotor ausgestalteten Antriebsmotor angetrieben werden. Der Antriebsmotor ist dabei üblicherweise über eine Getriebeeinrichtung, die beispielsweise als ein Schneckengetriebe ausgestaltet sein kann, einen Antriebsriemen und ein Riemenrad mit dem Rotor der Karusselltür bewegungsgekoppelt, wobei das Riemenrad mit dem Rotor drehfest verbunden ist.

Aus dem Stand der Technik sind Antriebsvorrichtungen für einen Rotor einer Karusselltür bekannt, bei denen eine Kraftübertragung von einem Antriebsrad auf das Riemenrad mittels eines verzahnten Antriebsriemens erfolgt. Bei einer entsprechenden Ausgestaltung der Antriebsvorrichtung müssen dann auch sowohl das Antriebsrad als auch das Riemenrad verzahnt sein. Jedoch sind die Kosten eines verzahnten Riemenrads sehr hoch.

Um die Kosten einer Antriebsvorrichtung zu reduzieren, kann ein nicht verzahntes Riemenrad verwendet werden, das mittels eines nicht verzahnten Antriebsriemens durch ein Antriebsrad angetrieben wird. Dabei erfolgt die Kraftübertragung auf das nicht verzahnte Riemenrad durch den Antriebsriemen mittels Seilreibung. Der Antriebsriemen besteht üblicherweise aus einem dehnbaren Material. Bei einem Beschleunigen oder Abbremsen der Karusselltür durch den Antriebsmotor wird der Zugtrum des Antriebsriemens, der beim Beschleunigen der Karusselltür im zulaufenden Bereich und beim Abbremsen der Karusselltür im ablaufenden Bereich zwischen dem Riemenrad und dem Antriebsrad gebildet ist, gedehnt. Aufgrund der Dehnung des Antriebsriemens wird die Seilreibung zwischen dem Antriebsriemen und dem Riemenrad und zwischen dem Antriebsriemen und dem Antriebsrad reduziert. Folglich muss bei einer entsprechenden herkömmlichen Antriebsvorrichtung der Antriebsriemen sehr stark vorgespannt werden, damit in jedem Betriebszustand die Vorspannkraft stets größer als die maximale Antriebsraft ist, so dass die Seilreibung zwischen dem Antriebsriemen und dem Riemenrad aufrecht erhalten bleibt. Aufgrund der hohen Vorspannung des Antriebsriemens sind die Lager des Antriebsrads und des Riemenrads stark belastet und einem hohen Verschleiß ausgesetzt.

Eine gattungsbildende Karusselltür ist beispielsweise aus der DE 20 2005 000 163 U1 bekannt geworden. Dabei handelt es sich insbesondere um eine handbetätigte Karusselltür mit einer Antriebsvorrichtung für einen Rotor. Die Antriebsvorrichtung umfasst dabei ferner einen Antriebsriemen, wobei der Antriebsmotor über den Antriebsriemen mit dem Rotor der Karusselltür bewegungsgekoppelt ist.

Aus der EP 0 165 443 A1 ist ein Türantrieb mit einer Einklemmsicherung für Türen von Aufzugskabinen als bekannt zu entnehmen. Bei diesem Türantrieb werden die Aufzugskabinentüren mittels eines Motors und mittels eines Antriebsriemens angetrieben. Der Türantrieb umfasst dabei ferner eine Reversierschaltvorrichtung, mittels der die Antriebseinrichtung der Aufzugskabinentür reversiert werden kann, wenn in dem Überstreichungsbereich der Aufzugskabinentüren beispielsweise ein Gegenstand liegt. Die Reversierschaltvorrichtung umfasst dazu eine mit dem Antriebsriemen bewegungsgekoppelte Zahnrolle und zwei Umlenkrollen, die mit der Zahnrolle mittels eines Zahnriemens ebenfalls bewegungsgekoppelt sind. Der Zahnriemen wird mittels Spannrollen gespannt, wobei die Spannrolle mit der Zahnrolle über einen Betätigungshebel schwenkbar verbunden ist. Die Spannrolle und die Zahnrolle sind dabei über einen Anschlaghebel schwenkbar verbunden. Die Spannrollen sind ferner mittels einer Feder miteinander verbunden. In Abhängigkeit der Antriebseinrichtung der Aufzugskabinentür wird der Zahnriemen mittels der Spannrollen und mittelbar mittels der Feder gespannt.

Schließlich ist aus der US 2003/089042 A1 eine Antriebsvorrichtung zum automatischen Betrieb eines Schließsystems für ein Kraftfahrzeug als bekannt zu entnehmen. Diese Antriebsvorrichtung umfasst verschiedene Elemente, wie einen Antriebsriemen, einen Antriebsritzel, eine Motorausgangswelle etc. Dabei ist der Antriebsriemen um eine Rolle und um zwei Umlenkrollen umlaufend geführt, wobei die beiden Umlenkrollen mittels federbestückten Rollen und mittels einer Spannvorrichtung abstandsvariabel gelagert sind.

Demgegenüber ist es Aufgabe der vorliegenden Erfindung, eine verbesserte Antriebsvorrichtung für einen Rotor einer Karusselltür bereitzustellen, die kostengünstiger und langlebiger als bekannte Antriebsvorrichtungen ausgebildet ist.

Diese Aufgabe der vorliegenden Erfindung wird bezüglich der Antriebsvorrichtung für einen Rotor einer Karusselltür gemäß den im Anspruch 1 angegebenen Merkmalen und bezüglich der Karusselltür entsprechend den im Anspruch 8 angegebenen Merkmalen gelöst. Vorteilhafte Ausgestaltungen sind in den Unteransprüchen angegeben.

Die Antriebsvorrichtung umfasst neben einer Antriebseinrichtung eine Spanneinrichtung zum Spannen und Umlenken des Antriebsriemens. Die Antriebseinrichtung ist dabei über einen Antriebsriemen mit einem Riemenrad eines Rotors und darüber mit einer Karusselltür bewegungsgekoppelt. Die Antriebseinrichtung ist dabei nicht nur über den Antriebsriemen, sondern auch zusätzlich über die Spanneinrichtung mit dem Rotor bewegungsgekoppelt, da der Antriebsriemen über die Antriebseinrichtung und die Spanneinrichtung verläuft. Dabei sind die Spanneinrichtung und die Antriebseinrichtung derart zueinander abstandsvariabel gelagert, dass eine Dehnung bzw. Längung des Antriebsriemens bei einer Beschleunigung oder Abbremsung des Rotors dadurch kompensiert wird, dass der Abstand der Spanneinrichtung zu der Antriebseinrichtung variiert wird. Die Spanneinrichtung umfasst eine Einlaufumlenkrolle und eine Ablaufumlenkrolle. Die Einlaufumlenkrolle ist einlaufseitg der Antriebseinrichtung angeordnet, so dass der auf die Antriebseinrichtung zulaufende Antriebsriemen zuerst über die Einlaufumlenkrolle umgelenkt und dann von der Antriebseinrichtung angetrieben wird. Die Ablaufumlenkrolle ist ablaufseitg der Antriebseinrichtung angeordnet ist, so dass der von der Antriebseinrichtung angetriebene und von dieser weglaufende Antriebsriemen durch die Ablaufumlenkrolle umgelenkt wird. Dabei ist/sind die Einlaufumlenkrolle und/oder die Ablaufumlenkrolle gegenüber der Zentralachse des Rotors abstandsvariabel gelagert.

Durch diese Ausgestaltung der Spanneinrichtung steht eine erste Seite des Antriebsriemens mit der Antriebseinrichtung in Kontakt, wohingegen die andere Seite des Antriebsriemens mit der Spanneinrichtung und mit dem Riemenrad in Kontakt steht. Somit können die ersten und zweiten Seiten des Antriebsriemens unterschiedliche Eigenschaften aufweisen. Die erste Seite des Antriebsriemens ist derart gestaltet, dass eine gute Kraftübertragung von der Antriebseinrichtung auf den Antriebsriemen gewährleistet ist. Dies ist dadurch ermöglicht, dass die Antriebseinrichtung ein Zahnrad umfasst, wobei lediglich die erste Seite des Antriebsriemens verzahnt ist. Die zweite Seite des Antriebsriemens kann derart ausgestaltet sein, dass zwischen dieser und dem Riemenrad eine hohe Haft- und Gleitreibung gegeben ist. Dies kann beispielsweise dadurch realisiert werden, dass der Antriebsriemen eine zweite gummierte Seite aufweist. Dabei erfolgt die Kraftübertragung von der Antriebseinrichtung auf das Riemenrad mittels Seilreibungsprinzip. Das Riemenrad ist nicht verzahnt, so dass die Kosten einer entsprechenden Antriebsvorrichtung reduziert sind.

Aufgrund der Kompensierung der Dehnung des Antriebsriemens durch die Abstandsveränderung der Spanneinrichtung zu der Antriebseinrichtung, also durch eine Verlängerung des vom Antriebsriemen zu umspannenden Weges, wird die für einen zuverlässigen Antrieb, d.h. für eine zuverlässige Beschleunigung und für eine noch viel wichtigere zuverlässige Abbremsung der Karusselltür notwendige Seil- bzw. Riemenreibung zwischen dem Antriebsriemen und dem Riemenrad aufrechterhalten. Damit kann die Vorspannkraft für den Antriebsriemen reduziert werden, so dass sowohl der Antriebsriemen als auch die Lager des Antriebsrads und des Riemenrads weniger belastet werden.

Die Spanneinrichtung ist gegenüber der Antriebseinrichtung derart abstandsvariabel gelagert, dass eine Dehnung des Antriebsriemens bei einer Beschleunigung oder Abbremsung des Rotors durch eine Lageveränderung der Spanneinrichtung kompensiert wird.

Alternativ ist es auch möglich, dass die Antriebseinrichtung gegenüber der Spanneinrichtung derart abstandsvariabel gelagert ist, dass eine Dehnung des Antriebsriemens bei einer Beschleunigung oder Abbremsung des Rotors durch eine Lageveränderung der Antriebseinrichtung kompensiert wird. Bei der Lageveränderung der Antriebseinrichtung kann der Abstand zwischen dieser und einer Zentralachse des Rotors durch eine entsprechende Bewegung der Antriebseinrichtung in Richtung auf die Zentralachse zu- oder von dieser weggerichtet verändert werden. Zusätzlich kann die Lage der Antriebseinrichtung in einer dazu senkrechten Bewegungsrichtung verändert werden.

Die Abstandsveränderung der Spanneinrichtung zu der Antriebseinrichtung kann beispielsweise dadurch realisiert sein, dass die Spanneinrichtung und/oder die Antriebseinrichtung in Abhängigkeit einer Beschleunigung oder Abbremsung motorisch verfahren werden.

Vorzugsweise wird die Abstandsveränderung der Spanneinrichtung zu der Antriebseinrichtung dadurch realisiert, dass die Spanneinrichtung mittels zumindest einer Kraftspeichereinrichtung, die eine Zugfedereinrichtung oder eine Druckfedereinrichtung umfassen kann, und/oder die Antriebseinrichtung mittels einer weiteren Kraftspeichereinrichtung, die eine Zugfedereinrichtung oder eine Druckfedereinrichtung umfassen kann, gegenüber einer zu einer Zentralachse des Rotors abstandsunveränderlichen Halteeinrichtung federnd gelagert ist/sind. Dabei können die jeweiligen Kraftspeichereinrichtungen auch als Spiralfedereinrichtungen, als Luftfedereinrichtungen oder allgemein als Pneumatikzylindereinrichtungen mit einem beliebigen komprimierbaren Fluid realisiert sein.

Diese Lösung der Abstandsveränderung ist besonders einfach und kostengünstig, da keine aktive Lageveränderung der Spanneinrichtung und/oder der Antriebseinrichtung notwendig ist. Denn in Abhängigkeit der Kräfteverhältnisse bei einer Beschleunigung des Rotors, bei einem Gleichlauf oder Stillstand des Rotors, oder bei einem Abbremsen des Rotors wird die Spanneinrichtung und/oder die Antriebseinrichtung zur Zentralachse des Rotors hin oder von dieser wegbewegt, so dass sich die Umlaufslänge des Antriebsriemens automatisch der Dehnung des Antriebsriemens anpasst.

Ganz allgemein und unabhängig davon, ob die Kraftspeichereinrichtung als Zugfedereinrichtung oder Druckfedereinrichtung realisiert ist, folgt bei einer Beschleunigung des Karusselltürrotors durch die Antriebseinrichtung die Einlaufumlenkrolle der Federkraft der ersten Kraftspeichereinrichtung. Gleichzeitig bewegt sich bei einer Beschleunigung des Karusselltürrotors durch die Antriebseinrichtung die Ablaufumlenkrolle entgegen der Federkraft der zweiten Kraftspeichereinrichtung. Bei einer Abbremsung des Karusselltürrotors durch die Antriebseinrichtung folgt die Einlaufumlenkrolle der Federkraft der ersten Kraftspeichereinrichtung und die Ablaufumlenkrolle bewegt sich entgegen der Federkraft der zweiten Kraftspeichereinrichtung.

Vorzugsweise ist die Einlaufumlenkrolle mittels einer ersten Kraftspeichereinrichtung abstandsvariabel und/oder lageveränderlich zu der Zentralachse des Rotors gelagert. Dabei ist die erste Kraftspeichereinrichtung an einer zur Zentralachse des Rotors abstandsunveränderlichen Halteeinrichtung befestigt. Weiterhin ist die Ablaufumlenkrolle vorzugsweise mittels einer zweiten Kraftspeichereinrichtung abstandsvariabel und/oder lageveränderlich zur Zentralachse des Rotors gelagert, wobei auch die zweite Kraftspeichereinrichtung an der Halteeinrichtung befestigt ist. Die Antriebseinrichtung ist dabei gegenüber der Zentralachse des Rotors abstandsunveränderlich gelagert. Sowohl die erste Kraftspeichereinrichtung als auch die zweite Kraftspeichereinrichtung können jeweils eine Zugfedereinrichtung oder eine Druckfedereinrichtung umfassen. Die Umlaufbahn des Antriebsriemens ist somit W-förmig, wobei die zwei freien Schenkel des W's zum Riemenrad hin gerichtet sind.

Somit ist der Antriebsriemen über die Einlaufumlenkrolle und die Ablaufumlenkrolle vorgespannt, so dass eine möglichst konstante Seilreibung in jedem Betriebszustand der Antriebsvorrichtung (Beschleunigung, Gleichlauf / Stillstand, Abbremsen des Rotors) gewährleistet ist, da eine Dehnung des Antriebsriemens beim Beschleunigen oder Abbremsen des Rotors kompensiert wird.

Denn bei einer Beschleunigung des Rotors durch die Antriebseinrichtung wird der Zugtrum des Antriebsriemens gedehnt. Gleichzeitig wird in dem Fall der Ausgestaltung der ersten Kraftspeichereinrichtung als eine Zugfedereinrichtung auch diese gedehnt. Hingegen wird im Fall der Ausgestaltung der ersten Kraftspeichereinrichtung als eine Druckfedereinrichtung diese bei einer Beschleunigung des Rotors durch die Antriebseinrichtung gestaucht. Somit wird bei einer Beschleunigung des Rotors durch die Antriebseinrichtung ein Abstand der Einlaufumlenkrolle zu der Zentralachse des Rotors verkleinert. Gleichzeitig mit der Verkleinerung des Abstandes der Einlaufumlenkrolle zur Zentralachse des Rotors wird die damit einhergehende Dehnung des Antriebsriemens durch eine Vergrößerung eines Abstandes der Ablaufumlenkrolle zur Zentralachse des Rotors kompensiert. Diese Vergrößerung des Abstandes der Ablaufumlenkrolle zur Zentralachse des Rotors wird dadurch realisiert, dass sich im Falle der Ausgestaltung der zweiten Kraftspeichereinrichtung als eine Zugfedereinrichtung diese gestaucht wird. Hingegen wird im Fall der Ausgestaltung der zweiten Kraftspeichereinrichtung als eine Druckfedereinrichtung diese bei einer Beschleunigung des Rotors durch die Antriebseinrichtung gedehnt. Durch diese Kinematik der Einlaufumlenkrolle und der Ablaufumlenkrolle wird somit die zum Antreiben des Rotors notwendige Seilreibung zwischen dem Antriebsriemen und dem Riemenrad aufrechterhalten.

Vorzugsweise umfasst die Antriebsvorrichtung ferner einen Anschlag, der den Abstand der Ablaufumlenkrolle zur Zentralachse des Rotors auf einen Minimalabstand begrenzt, so dass der Abstand der Ablaufumlenkrolle in jedem Betriebszustand der Antriebsvorrichtung immer größer oder gleich dem Minimalabstand ist. Bei einer Abbremsung des Rotors durch die Antriebseinrichtung wird somit der Abstand der Ablaufumlenkrolle zur Zentralachse des Rotors lediglich bis zum Minimalabstand verkleinert.

Aufgrund der Begrenzung der Verkleinerung des Abstandes der Ablaufulenkrolle zur Zentralachse des Rotors wird verhindert, dass sich die Ablaufumlenkrolle (über ein gewisses Maß hinaus) auf die Zentralachse des Rotors zubewegt, so dass im Falle einer als Zugfedereinrichtung ausgebildeten zweiten Federeinrichtung sich diese nicht dehnen kann. Dies gewährleistet einen möglichst kurzen Anhalteweg des Karusseltürrotors, da die Ablaufumlenkrolle nicht erst in Richtung der Zentralachse des Rotors über eine gewisse Distanz gezogen werden muss, bevor das maximale Bremsmoment auf das Riemenrad übertragen werden kann. Die Dehnung des Zugtrums des Antriebsriemens, der bei einem Abbremsen des Karusselltürrotors durch die Antriebseinrichtung im ablaufenden Bereich zwischen der Ablaufumlenkrolle und dem Riemenrad gebildet ist, wird dabei durch eine Vergrößerung des Abstandes der Einlaufumlenkrolle zur Zentralachse des Rotors kompensiert.

Die Erfindung wird nachfolgend anhand von Ausführungsbeispielen weiter erläutert. Dabei zeigen im Einzelnen:
- Figur 1:: eine schematische Draufsicht auf eine Antriebsvorrichtung, die mit einem Riemenrad eines Karusselltürrotors bewegungsgekoppelt ist, wobei die Antriebsvorrichtung in einem Zustand dargestellt ist, in dem der Karusselltürrotor entweder nicht oder mit einer konstanten Geschwindigkeit angetrieben wird;
- Figur 2:: die in Figur 1 dargestellte Antriebsvorrichtung in einem Zustand des Beschleunigens des Karusselltürrotors; und
- Figur 3:: die in Figur 1 dargestellte Antriebsvorrichtung in einem Zustand des Abbremsens des Karusselltürrotors.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

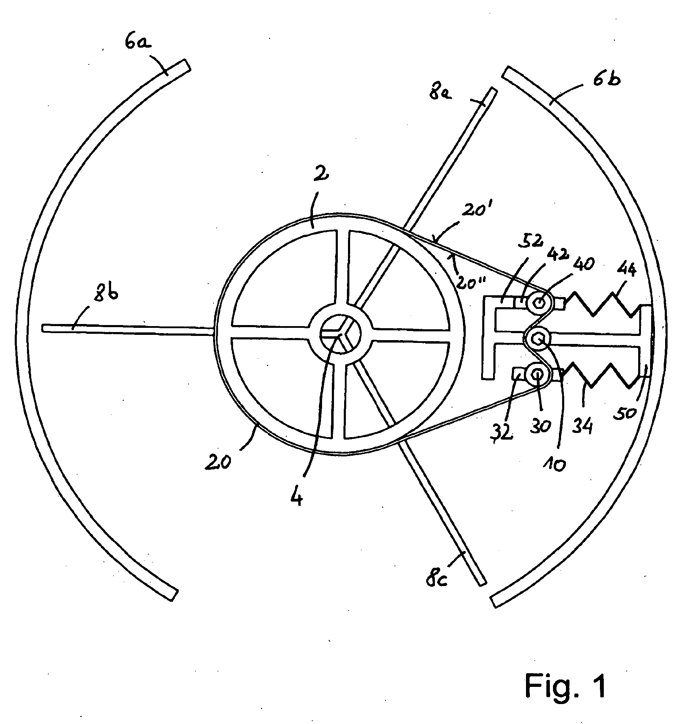

Figur 1 zeigt eine schematische Draufsicht auf eine Karusselltür samt Antriebsvorrichtung. Die Karusselltür umfasst zwei kreisbogenförmig gekrümmte Seitenwände 6a, 6b, zwischen deren Endbereichen ein Eingangs- und ein Ausgangsbereich gebildet sind. Weiterhin ist zwischen den Seitenwänden 6a, 6b mittig ein um eine Zentralachse 4 drehbar gelagerter Rotor angeordnet. Von der mittigen Zentralachse 4 sind in Radialrichtung verlaufend drei in Umfangsrichtung versetzt zueinander liegende Rotorflügel 8a, 8b, 8c angeordnet. Der Rotor ist drehfest mit einem auch als Rotorantrieb bezeichneten Riemenrad 2 verbunden, wobei die Drehachse 4 des Rotors mit der Drehachse des Riemenrads 2 zusammenfällt.

Die in Figur 1 dargestellte Antriebsvorrichtung zum Antreiben, d.h. zum Beschleunigen und Abbremsen des Karusselltürrotors umfasst eine Antriebseinrichtung 10 in Form eines verzahnten Antriebsrads 10, das auch als Antriebszahnrad oder Antriebspulley bezeichnet wird, wobei die Verzahnung des Antriebsrads 10 nicht dargestellt ist. Weiterhin umfasst die Antriebsvorrichtung einen Antriebsriemen 20, der eine verzahnte Seite 20' und eine unverzahnte Seite 20" aufweist, wobei die verzahnte Seite 20' mit dem verzahnten Antriebsrad 10 in Eingriff steht, und wobei die unverzahnte Seite 20" an dem Riemenrad 2 anliegt.

Die Antriebsvorrichtung umfasst ferner eine Spanneinrichtung mit einer Einlaufumlenkrolle 30 und eine Ablaufumlenkrolle 40. Die Einlaufumlenkrolle 30 ist einlaufseitg des Antriebsrads 10 angeordnet. D.h., dass der von dem Riemenrad 2 auf das Antriebsrad 2 zulaufende Antriebsriemen 20 zuerst von der Einlaufumlenkrolle 30 in Richtung des Antriebsrads 10 umgelenkt und dann von dem Antriebsrad 10 angetrieben wird. Die Ablaufumlenkrolle 40 ist ablaufseitig des Antriebsrads 10 angeordnet ist. Dies wiederum heißt, dass der von dem Antriebsrad 10 angetriebene und von diesem weglaufende Antriebsriemen 20 durch die Ablaufumlenkrolle 40 in Richtung des Riemenrads 2 umgelenkt wird. Der Teil der Umlaufbahn des Antriebsriemens 2 um die Einlaufumlenkrolle 30, das Antriebsrad 10 und die Ablaufumlenkrolle 40 ist somit W-förmig, wobei das Antriebsrad 10 zwischen der Einlaufumlenkrolle 30 und der Ablaufumlenkrolle 40 angeordnet ist, und wobei die zwei freien Schenkel des W's zum Riemenrad 2 hin gerichtet sind.

Sowohl die Einlaufumlenkrolle 30 als auch die Ablaufumlenkrolle 40 sind nicht verzahnt. Aufgrund der oben beschriebenen Führung des Antriebsriemens 20 steht die unverzahnte Seite 20" des Antriebsriemens 20 mit den Riemenrad 2, der Einlaufumlenkrolle 30 und der Ablaufumlenkrolle 40 in Kontakt, wohingegen die verzahnte Seite 20' des Antriebsriemens 20 mit dem verzahnten Antriebsrad 10 in Eingriff steht. Somit ist das Antriebsrad 10 über die Einlaufumlenkrolle 30, die Ablaufumlenkrolle 40 und über den Zahnriemen 20 mit dem Riemenrad 2 bewegungsgekoppelt.

Die jeweiligen Drehachsen der Einlaufumlenkrolle 30, des Antriebsrads 10 und der Ablaufumlenkrolle 40 sind jeweils parallel zur Rotorzentralachse 4 ausgerichtet.

Die Einlaufumlenkrolle 30 ist auf einem ersten Schlitten 32 und die Ablaufumlenkrolle 40 ist auf einem zweiten Schlitten 42 jeweils drehbar gelagert. Anstelle der ersten und zweiten Schlitten könnten aber auch erste und zweite Hebel vorgesehen sein, auf denen jeweils die Einlaufumlenkrolle 30 und die Ablaufumlenkrolle 40 drehbar gelagert sind.

Der erste Schlitten 32 und der zweite Schlitten 42 sind derart abstandsvariabel zum Riemenrad 2 und zur Zentralachse 4 des Rotors gelagert, dass sich der erste Schlitten 32 und der zweite Schlitten 42 auf das Riemenrad 2 und die Rotorzentralachse 4 zu und von diesen weg bewegen können. In dem in den Figuren 1 bis 3 dargestellten Ausführungsbeispiel sind die Schlitten 32 und 42 derart gelagert, dass sich diese bei eine Lageveränderung nicht direkt auf die Rotorzentralachse 4 zu oder von dieser weg bewegen, sondern dass sich die ersten und zweiten Schlitten 32, 42 jeweils auf neben der Rotorzentralachse befindliche Punkte hin oder von diesen weg bewegbar sind.

Die in den Figuren 1 bis 3 dargestellte Antriebsvorrichtung umfasst ferner eine Halteeinrichtung 50. Die Halteeinrichtung 50 ist an einem Stator, also am nicht drehenden Teil der Türanlage befestigt und erstreckt sich in Richtung der Rotorzentralachse 4 und des Riemenrads 2. Das Antriebsrad 10 ist drehbar mit der Halteeinrichtung 50 verbunden. Weiterhin sind der erste Schlitten 32 über eine erste Kraftspeichereinrichtung 34 und der zweite Schlitten 42 über eine zweite Kraftspeichereinrichtung 44 mit der Halteeinrichtung 50 verbunden. Dabei sind sowohl die erste Kraftspeichereinrichtung 34 als auch die zweite Kraftspeichereinrichtung 44 jeweils als eine Zugfedereinrichtung ausgebildet.

Die erste Zugfedereinrichtung 34 zieht den ersten Schlitten 32 samt der Einlaufumlenkrolle 32 und die zweite Zugfedereinrichtung 44 zieht den zweiten Schlitten 42 samt der Ablaufumlenkrolle 40 auf die Seitenwand 6b zu und somit von der Rotorzentralachse 4 weg, wobei der Antriebsriemen 20 sowohl die Einlaufumlenkrolle 30 als auch die Ablaufumlenkrolle 40 zur Rotorzentralachse 4 gerichtet druckbelastet. Somit halten die erste Federeinrichtung 34 und die zweite Federeinrichtung 44 den Antriebsriemen 20 unter mechanischer Zugspannung, so dass der Antriebsriemen 20 sowohl um das Riemenrad 2 als auch um das Antriebsrad 10 gespannt ist.

Alternativ können die erste Federeinrichtung 34 und/oder die zweite Federeinrichtung 44 aber auch jeweils als ein Druckfedereinrichtung ausgebildet sein. Bei einer entsprechenden nicht dargestellten Ausführungsform der Antriebsvorrichtung wäre die erste Druckfedereinrichtung zwischen dem Riemenrad 2 und der Einlaufumlenkrolle 30 angeordnet, und die zweite Druckfedereinrichtung wäre zwischen dem Riemenrad 2 und der Ablaufumlenkreinrichtung 40 angeordnet.

Der Antriebsriemen 20 kann beispielsweise aus einer (faserverstärkten) Gummimischung bestehen, oder die unverzahnte Seite 20" des Antriebsriemens 20 kann eine haft- und gleitreibungserhöhende Beschichtung, so wie beispielsweise eine Gummierung aufweisen, so dass eine gute Kraftübertragung vom Antriebsriemen 20 auf den Rotorantrieb 2 erreicht wird.

Die dargestellte Antriebsvorrichtung umfasst weiterhin einen Anschlag 52, der den Abstand der Ablaufumlenkrolle 40 zu der Rotorzentralachse 4 auf einen Minimalwert begrenzt. In dem dargestellten Ausführungsbeispiel ist der Anschlag 52 ein integrierter Bestandteil der Halteeinrichtung 50. Jedoch kann der Anschlag 52 auch lediglich an der Halteeinrichtung 50 befestigt sein oder als separates Bauteil gebildet sein, das abstandsunveränderlich zu der Rotorzentralachse 4 an der Karusselltür befestigt ist.

In Figur 1 ist die Antriebsvorrichtung in einem Zustand dargestellt, in dem der Karusselltürrotor durch das Antriebsrad 10 nicht angetrieben wird und somit still steht. In diesem Zustand gleicht der Abstand der Einlaufumlenkrolle 30 zur Rotorzentralachse 4 dem Abstand der Ablaufumlenkrolle 40 zur Rotorzentralachse 4, da in dem dargestellten Ausführungsbeispiel die erste Federeinrichtung 34 die gleichen Eigenschaften aufweist wie die zweite Federeinrichtung 44, so dass die erste Federeinrichtung 34 die gleiche Kraft auf den erste Schlitten 32 und somit auf die Einlaufumlenkrolle 30 ausübt wie die zweite Federeinrichtung 44 auf den zweiten Schlitten 42 und somit auf die Ablaufumlenkrolle 40. Weiterhin liegt der zweite Schlitten 44 an dem Anschlag 52 an, so dass der Abstand der Ablaufumlenkrolle 40 zum Riemenrad 2 und zur Rotorzentralachse 4 nicht weiter vermindert werden kann.

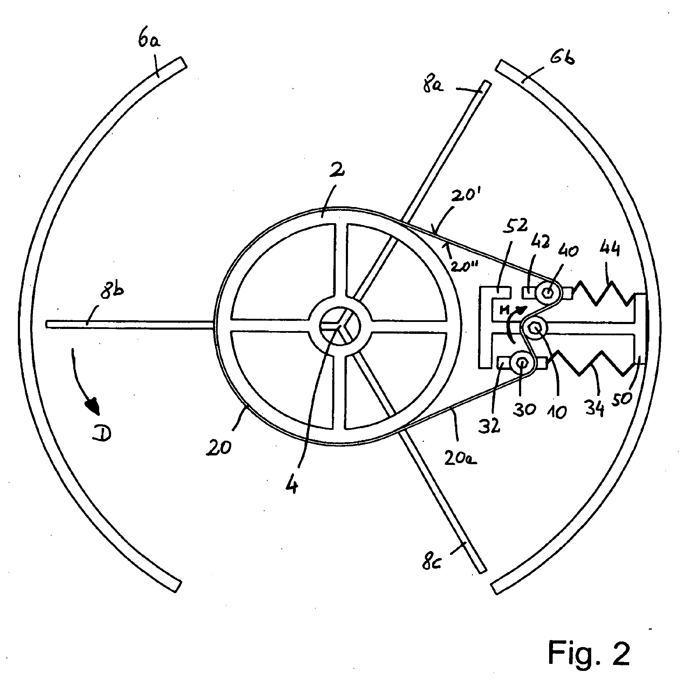

Figur 2 stellt die in Figur 1 dargestellte Antriebsvorrichtung in einem Zustand dar, in dem auf das Antriebsrad 10 ein Drehmoment M aufgebracht wird, so dass das Antriebsrad 10 den Karusselltürrotor antreibt bzw. beschleunigt, so dass sich der Karusselltürrotor in die Drehrichtung D des mittels des in Figur 2 dargestellten Pfeils dreht. Dadurch werden sowohl das Zugtrum 20a, also der freie und nicht aufliegende Abschnitt des Antriebsriemens 20 zwischen dem Riemenrad 2 und der Einlaufumlenkrolle 30 als auch die erste Federeinrichtung 34 gedehnt. Aufgrund der Dehnung der ersten Federeinrichtung 34 wird die Einlaufumlenkrolle 30 hin zum Riemenrad 2 und hin zur Rotorzentralachse 4 bewegt.

Diese Dehnung des Zugtrums und der ersten Federeinrichtung 34 wird dadurch kompensiert, dass die zweite Federeinrichtung 44 den zweiten Schlitten 42 samt Ablaufumlenkrolle 40 hin zur Seitenwand 6b und somit weg vom Riemenrad 2 und von der Rotorzentralachse 4 zieht, da der zweiten Zugfedereinrichtung 44 durch den Antriebsriemen 20 eine kleinere Gegenkraft als im Stillstand des Karusselltürrotors entgegenwirkt. Aufgrund dieser Kompensierung der Dehnung der Zugtrums und der ersten Zugfedereinrichtung 34 durch die zweite Zugfedereinrichtung 44 wird die zum zuverlässigen Antreiben des Karusselltürrotors notwendige Seilreibung zwischen dem Antriebsriemen 20 und dem Riemenrad 2 aufrechterhalten.

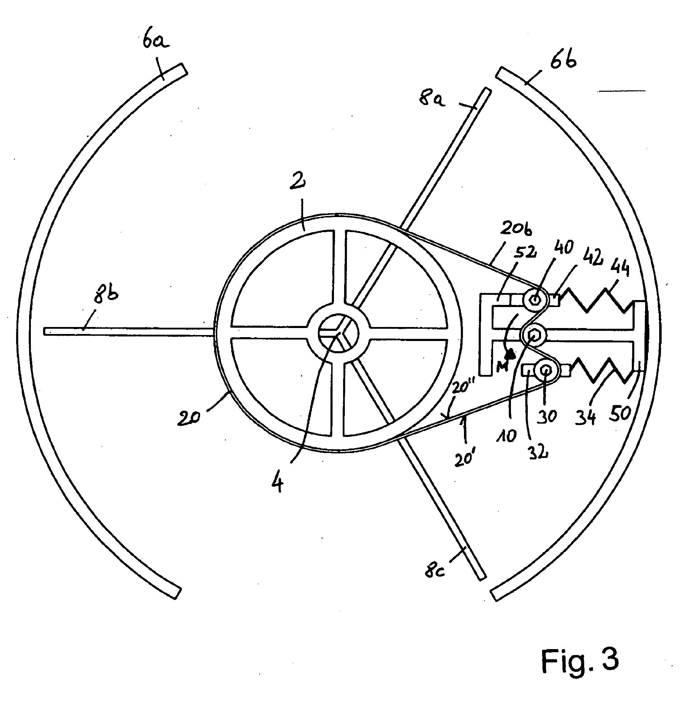

Figur 3 zeigt die in Figur 1 dargestellte Antriebsvorrichtung in einem Zustand, in dem auf das Antriebsrad 10 ein der Drehrichtung D entgegengesetztes Drehmoment M aufgebracht wird, so dass das Antriebsrad 10 den Karusselltürrotor abbremst. Dadurch werden sowohl das Zugtrum 20b, also der freie und nicht aufliegende Abschnitt des Antriebsriemens 20 zwischen dem Riemenrad 2 und der Ablaufumlenkrolle 40 als auch die zweite Federeinrichtung 44 gedehnt. Aufgrund der Dehnung der zweiten Federeinrichtung 44 wird die Ablaufumlenkrolle 40 hin zum Riemenrad 2 und hin zur Rotorzentralachse 4 bewegt, wobei jedoch die Bewegung des zweiten Schlittens 42 samt Ablaufumlenkrolle 40 hin zur Rotorzentralachse 4 durch den Anschlag 52 begrenzt wird.

Der Anschlag 52 verhindert folglich eine (übermäßige) Dehnung der zweiten Zugfedereinrichtung 44, so dass bei einem Abbremsen des Karusselltürrotors (beispielsweise ein Sicherheitshalt) die Ablaufumlenkrolle 40 keinen oder nur einen kurzen Weg zurücklegen muss, bevor die Bremskraft durch den Antriebsriemens 20 auf das Riemenrad 2 übertragen werden kann. Dadurch wird ein möglichst kurzer Anhalteweg des Karusseltürrotors erreicht.

Die Dehnung des Zugtrums und gegebenenfalls die Dehnung der zweiten Federeinrichtung 44 wird dadurch kompensiert, dass die erste Federeinrichtung 34 den ersten Schlitten 32 samt Einlaufumlenkrolle 30 hin zur Seitenwand 6b und somit weg vom Riemenrad 2 und von der Rotorzentralachse 4 zieht, da der ersten Zugfedereinrichtung 34 durch den Antriebsriemen 20 eine kleinere Gegenkraft als im Stillstand des Karusselltürrotors entgegenwirkt. Aufgrund dieser Kompensierung der Dehnung des Zugtrums und gegebenenfalls der Dehnung der zweiten Zugfedereinrichtung 44 durch die erste Zugfedereinrichtung 34 wird die zum zuverlässigen Abbremsen des Karusselltürrotors notwendige Seilreibung zwischen dem Antriebsriemen 20 und dem Riemenrad 2 aufrechterhalten.

Durch die Antriebvorrichtung wird nicht nur eine Dehnung des Antriebsriemens 20 durch ein Antreiben oder Abbremsen durch das Antriebsrad 10 kompensiert, sondern auch eine Dehnung des Antriebsriemens 20 bei einer manuellen Krafteinbringung über einen der Rotorflügel 8a, 8b, 8c, so dass stets die zum zuverlässigen Antreiben und/oder Abbremsen des Karusselltürrotors notwendige Seilreibung zwischen dem Antriebsriemen 20 und dem Riemenrad 2 aufrechterhalten bleibt.

### Bezugszeichenliste

- 2: Riemenrad, Rotorantrieb
- 4: Zentralachse des Rotors
- 6a, 6b: Seitenwand (der Karusselltür)
- 8a, 8b, 8c: Flügel (des Rotors)
- 10: Antriebseinrichtung, Antriebsrad
- 20: Antriebsriemen
- 20a, 20b: Zugtrum (des Antriebsriemens)
- 20': verzahnte Seite des Antriebsriemens
- 20": unverzahnte Seite des Antriebsriemens
- 30: Einlaufumlenkrolle
- 32: Schlitten (der Einlaufumlenkrolle)
- 34: erste Kraftspeichereinrichtung
- 40: Ablaufumlenkrolle
- 42: Schlitten (der Ablaufumlenkrolle)
- 44: zweite Kraftspeichereinrichtung
- 50: Halteeinrichtung
- 52: Anschlag
- D: Drehrichtung (des Karusselltürrotors)
- M: Drehmoment (auf die Antriebseinrichtung)

## Patentansprüche

1. Antriebsvorrichtung für einen Rotor einer Karusseltür, umfassend:
- eine Antriebseinrichtung (10);
- einen Antriebsriemen (20);
- die Antriebseinrichtung (10) ist über den Antriebsriemen (20) mit einem mit dem Rotor drehfest verbundenen Riemenrad (2) bewegungsgekoppelt;
**gekennzeichnet durch** die folgenden Merkmale:
- die Antriebsvorrichtung umfasst ferner eine Spanneinrichtung (30, 40) zum Spannen und Umlenken des Antriebsriemens (20);
- die Spanneinrichtung (30, 40) umfasst eine Einlaufumlenkrolle (30) und eine Ablaufumlenkrolle (40);
- der Antriebsriemen (20) verläuft über die Antriebseinrichtung (10) und die Spanneinrichtung (30, 40);
- die Spanneinrichtung (30, 40) und die Antriebseinrichtung (10) sind zueinander derart abstandsvariabel gelagert, dass eine Dehnung des Antriebsriemens (20) bei einer Beschleunigung oder Abbremsung des Rotors **durch** eine Abstandsveränderung der Spanneinrichtung (30, 40) zu der Antriebseinrichtung (10) kompensiert wird;
- der Antriebsriemen (20) umfasst eine verzahnte Seite (20') und eine unverzahnte Seite (20");
- die Antriebseinrichtung (10) umfasst ein verzahntes Antriebsrad (10), das mit der verzahnten Seite (20') des Antriebsriemen (20) in Eingriff steht; und
- die unverzahnte Seite (20") liegt an der Spanneinrichtung (30, 40) und an einem mit dem Rotor drehfest verbundenen nicht-verzahnten Riemenrad (2) an.

2. Antriebsvorrichtung nach Anspruch 1, **dadurch gekennzeichnet, dass** die Spanneinrichtung (30, 40) mittels zumindest einer Kraftspeichereinrichtung (34, 44) und/oder die Antriebseinrichtung (10) mittels einer weiteren Kraftspeichereinrichtung gegenüber einer zu einer Zentralachse (4) des Rotors abstandsunveränderlichen Halteeinrichtung (50) federnd gelagert ist/sind.

3. Antriebsvorrichtung nach einem der Ansprüche 1 oder 2, **gekennzeichnet durch** die folgenden Merkmale:
- die Einlaufumlenkrolle (30) ist mittels einer ersten Kraftspeichereinrichtung (34) abstandsvariabel und/ oder lageveränderlich zu der Zentralachse (4) des Rotors gelagert, wobei die erste Kraftspeichereinrichtung (34) an einer zur Zentralachse (4) des Rotors abstandsunveränderlichen Halteeinrichtung (50) befestig ist;
- die Ablaufumlenkrolle (40) ist mittels einer zweiten Kraftspeichereinrichtung (44) abstandsvariabel und/ oder lageveränderlich zu der Zentralachse (4) des Rotors gelagert, wobei die zweite Kraftspeichereinrichtung (44) an der Halteeinrichtung (50) befestig ist; und
- die Antriebseinrichtung (10) ist gegenüber der Zentralachse (4) des Rotors abstandsunveränderlich gelagert.

4. Antriebsvorrichtung nach Anspruch 3, **dadurch gekennzeichnet, dass** die erste Kraftspeichereinrichtung (34) eine erste Zugfedereinrichtung (34) oder eine erste Druckfedereinrichtung umfasst, und/oder dass die zweite Kraftspeichereinrichtung (44) eine zweite Zugfedereinrichtung (44) oder eine zweite Druckfedereinrichtung umfasst.

5. Antriebvorrichtung nach einem der Ansprüche 1 bis 4, **dadurch gekennzeichnet, dass** die Antriebsvorrichtung ferner einen Anschlag (52) umfasst, der einen Abstand der Ablaufumlenkrolle (40) zu der Zentralachse (4) des Rotors auf einen Minimalabstand begrenzt.

6. Antriebsvorrichtung nach einem der Ansprüche 1 bis 5, **gekennzeichnet durch** die folgenden Merkmale:
- bei einer Beschleunigung des Rotors **durch** die Antriebseinrichtung (10) wird ein Abstand der Einlaufumlenkrolle (30) zu der Zentralachse (4) des Rotors verkleinert und ein Abstand der Ablaufumlenkrolle (40) zu der Zentralachse (4) des Rotors wird vergrößert; und
- bei einer Abbremsung des Rotors **durch** die Antriebseinrichtung (10) wird der Abstand der Einlaufumlenkrolle (30) zu der Zentralachse (4) des Rotors vergrößert.

7. Antriebsvorrichtung nach Anspruch 6, wenn von Anspruch 5 abhängig, **dadurch gekennzeichnet, dass** bei der Abbremsung des Rotors durch die Antriebseinrichtung (10) der Abstand der Ablaufumlenkrolle (40) zu der Zentralachse (4) des Rotors bis zum Minimalabstand verkleinert wird.

8. Karusselltür mit den folgenden Merkmalen:
- die Karusselltür umfasst einen Rotor;
- der Rotor umfasst zumindest zwei Flügel (8a, 8b, 8c) und ein Riemenrad (2);
- der Rotor dreht um eine Zentralachse (4),
**gekennzeichnet durch** die folgenden Merkmale:
- die Karusselltür umfasst eine Antriebsvorrichtung nach einem der vorangehenden Ansprüche;
- das Riemenrad (2) ist mit dem Antriebsriemen (20) bewegungsgekoppelt und **durch** die Antriebsvorrichtung antreibbar und/oder abbremsbar.

## Claims

1. Drive device for a rotor of a revolving door, comprising:
- a drive apparatus (10);
- a drive belt (20);
- the drive apparatus (10) is coupled via the drive belt (20) in terms of movement to a belt pulley (2) being connected to the rotor for conjoint rotation;
**characterised by** the following features:
- the drive device further comprises a clamping apparatus (30, 40) for clamping and redirecting the drive belt (20);
- the clamping apparatus (30, 40) comprises an input redirection roller (30) and an output redirection roller (40);
- the drive belt (20) extends over the drive apparatus (10) and the clamping apparatus (30, 40);
- the clamping apparatus (30, 40) and the drive apparatus (10) are supported so as to be variable in terms of spacing relative to each other in such a manner that an expansion of the drive belt (20) in the event of acceleration or braking of the rotor is compensated for by the spacing change of the clamping apparatus (30, 40) with respect to the drive apparatus (10);
- the drive belt (20) comprises a toothed side (20') and a non-toothed side (20");
- the drive apparatus (10) comprises a toothed drive wheel (10) which is in engagement with the toothed side (20') of the drive belt (20); and
- the non-toothed side (20") is in abutment with the clamping apparatus (30, 40) and with a non-toothed belt pulley (2) which is connected to the rotor for conjoint rotation.

2. Drive device according to claim 1, **characterised in that** the clamping apparatus (30, 40) is resiliently supported by means of at least one force storage apparatus (34, 44) and/or the drive apparatus (10) is resiliently supported by means of another force storage apparatus with respect to a retention apparatus (50) which is non-variable in terms of spacing with respect to a centre axis (4) of the rotor.

3. Drive device according to claims 1 or 2, **characterised by** the following features:
- the input redirection roller (30) is supported by means of a first force storage apparatus (34) so as to be variable in terms of spacing and/or positionally variable with respect to the centre axis (4) of the rotor, the first force storage apparatus (34) being secured to a retention apparatus (50) which is non-variable in terms of spacing with respect to the centre axis (4) of the rotor;
- the output redirection roller (40) is supported by means of a second force storage apparatus (44) so as to be variable in terms of spacing and/or positionally variable with respect to the centre axis (4) of the rotor, the second force storage apparatus (44) being secured to the retention apparatus (50); and
- the drive apparatus (10) is supported so as to be non-variable in terms of spacing with respect to the centre axis (4) of the rotor.

4. Drive device according to claim 3, **characterised in that** the first force storage apparatus (34) comprises a first tension spring apparatus (34) or a first pressure spring apparatus, and/or **in that** the second force storage apparatus (44) comprises a second tension spring apparatus (44) or a second pressure spring apparatus.

5. Drive device according to any one of claims 1 to 4, **characterised in that** the drive device further comprises a stop (52) which limits a spacing of the output redirection roller (40) with respect to the centre axis (4) of the rotor to a minimum spacing.

6. Drive device according to any one of claims 1 to 5, **characterised by** the following features:
- when the rotor is accelerated by the drive apparatus (10), a spacing of the input redirection roller (30) with respect to the centre axis (4) of the rotor is reduced and a spacing of the output redirection roller (40) with respect to the centre axis (4) of the rotor is increased; and,
- when the rotor is braked by the drive apparatus (10), the spacing of the input redirection roller (30) with respect to the centre axis (4) of the rotor is increased.

7. Drive device according to claim 6, when dependent on claim 5, **characterised in that**, when the rotor is braked by the drive apparatus (10), the spacing of the output redirection roller (40) with respect to the centre axis (4) of the rotor is reduced as far as the minimum spacing.

8. Revolving door having the following features:
- the revolving door comprises a rotor;
- the rotor comprises at least two wings (8a, 8b, 8c) and a belt pulley (2);
- the rotor rotates about a centre axis (4),
**characterised by** the following features:
- the revolving door comprises a drive device according to any one of the preceding claims;
- the belt pulley (2) is coupled in terms of movement to the drive belt (20) and can be driven and/or braked by the drive device.

## Revendications

1. Dispositif d'entraînement pour un rotor d'une porte à tambour, incluant :
- un moyen d'entraînement (10) ;
- une courroie d'entraînement (20) ;
- le moyen d'entraînement (10) est couplé via la courroie d'entraînement (20) en termes de mouvement avec une poulie à courroie (2) reliée solidairement en rotation avec le rotor ;
**caractérisé par** les caractéristiques suivantes :
- le dispositif d'entraînement inclut en outre un moyen de tensionnement (30, 40) pour tendre et pour défléchir la courroie d'entraînement (20) ;
- le moyen de tensionnement (30, 40) inclut un rouleau de renvoi d'entrée (30) et un rouleau de renvoi de sortie (40) ;
- la courroie d'entraînement (20) s'étend par-dessus le moyen d'entraînement (10) et le moyen de tensionnement (30, 40) ;
- le moyen de tensionnement (30, 40) et le moyen d'entraînement (10) sont montés l'un par rapport à l'autre à une distance variable de telle façon que l'extension de la courroie d'entraînement (20) lors d'une accélération ou d'un freinage du rotor est compensée par une variation de distance du moyen de tensionnement (30, 40) par rapport au moyen d'entraînement (10) ;
- la courroie d'entraînement (20) inclut un côté denté (20') et un côté non denté (20") ;
- le moyen d'entraînement (10) inclut une poulie d'entraînement dentée (10) qui est en engagement avec le côté denté (20') de la courroie d'entraînement (20) ; et
- le côté non denté (20") est appliqué contre le moyen de tensionnement (30, 40) et contre une poulie à courroie (2) non dentée reliée solidairement en rotation au rotor.

2. Dispositif d'entraînement selon la revendication 1, **caractérisé en ce que** le moyen de tensionnement (30, 40) est monté avec effet ressort au moyen d'au moins un dispositif d'accumulation de force (34, 44) et/ou **en ce que** le moyen d'entraînement (10) est monté avec effet ressort au moyen d'un autre dispositif d'accumulation de force par rapport à un moyen de maintien (50) disposé à une distance non variable d'un axe central (4) du rotor.

3. Dispositif d'entraînement selon l'une des revendications 1 ou 2, **caractérisé par** les caractéristiques suivantes :
- le rouleau de renvoi d'entrée (30) est monté au moyen d'un premier dispositif d'accumulation de force (34) à distance variable et/ou en position variable par rapport à l'axe central (4) du rotor, et le premier dispositif d'accumulation de force (34) est fixé sur un moyen de maintien (50) disposé à une distance non variable de l'axe central (4) du rotor ;
- le rouleau de renvoi de sortie (40) est monté au moyen d'un second dispositif d'accumulation de force (44) à distance variable et/ou en position variable par rapport à l'axe central (4) du rotor, et le second dispositif d'accumulation de force (44) est fixé sur le moyen de maintien (50) ; et
- le moyen d'entraînement (10) est monté à distance non variable par rapport à l'axe central (4) du rotor.

4. Dispositif d'entraînement selon la revendication 3, **caractérisé en ce que** le premier dispositif d'accumulation de force (34) inclut un premier dispositif à ressort de traction (34) ou un premier dispositif à ressort de compression, et/ou **en ce que** le second dispositif d'accumulation de force (44) inclut un second dispositif à ressort de traction (44) ou un second dispositif à ressort de compression.

5. Dispositif d'entraînement selon l'une des revendications 1 à 4, **caractérisé en ce que** le dispositif d'entraînement inclut en outre une butée (52) qui limite une distance du rouleau de renvoi de sortie (40) par rapport à l'axe central (4) du rotor à une distance minimale.

6. Dispositif d'entraînement selon l'une des revendications 1 à 5, **caractérisé par** les caractéristiques suivantes :
- lors d'une accélération du rotor par le moyen d'entraînement (10) une distance du rouleau de renvoi d'entrée (30) à l'axe central (4) du rotor est diminuée et une distance du rouleau de renvoi de sortie (40) à l'axe central (4) du rotor est augmentée ; et
- lors d'un freinage du rotor par le moyen d'entraînement (10) la distance du rouleau de renvoi d'entrée à l'axe central (4) du rotor est augmentée.

7. Dispositif d'entraînement selon la revendication 6, prise en dépendance de la revendication 5, **caractérisé en ce que** lors du freinage du rotor par le moyen d'entraînement (10) la distance du rouleau de renvoi de sortie (40) à l'axe central (4) du rotor est diminuée jusqu'à la distance minimale.

8. Porte à tambour avec les éléments techniques suivants :
- la porte à tambour inclut un rotor ;
- le rotor inclut au moins deux vantaux (8a, 8b, 8c) et une poulie à courroie (2) ;
- le rotor tourne autour d'un axe central (4),
**caractérisée par** les caractéristiques suivantes :
- la porte à tambour inclut un dispositif d'entraînement selon l'une des revendications précédentes ;
- la poulie à courroie (2) est couplée en termes de mouvement avec la courroie d'entraînement (20) et peut être entraînée et/ou freinée par le dispositif d'entraînement.
